# EUROPÄISCHE PATENTSCHRIFT

(11) **EP 2 732 706 B1**
(45) Veröffentlichungstag und Bekanntmachung des Hinweises auf die Patenterteilung: **11.01.2017**
(21) Anmeldenummer: 12192677.8
(22) Anmeldetag: 14.11.2012
(51) Int. Cl.: A23C 1/04, A23C 1/14, A23C 3/037, A23C 1/12

(54) **Milchpulver mit hohem Molkeproteinindex**
Milk powder with high whey protein index
Lait en poudre avec haut index de protéines de lactosérum

(43) Veröffentlichungstag der Anmeldung: 21.05.2014
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- EP-A1- 1 314 357
- WO-A1-01/47365
- DE-A1-102004 039 733
- Vandna Sikand ET AL: "Impact of protein standardization of milk powder with lactose or permeate on whey protein nitrogen index and heat classification", Dairy science & technology, vol. 88, no. 1, 1 January 2008 (2008-01-01), pages 105-120, XP055222910, FR ISSN: 1958-5586, DOI: 10.1051/dst:2007011

## Beschreibung

### Gebiet der Erfindung

Die Erfindung befindet sich auf dem Gebiet Milchprodukte und betrifft ein neues Verfahren zur Herstellung von keimarmen Milchpulvern mit hohem Molkenproteinindex (MPI)

### Stand der Technik

Zur Herstellung von keimarmen Milchpulvern wird beispielsweise bereits pasteurisierte Magermilch mit etwa 9 % Trockenmasse auf eine Konzentration von etwa 40 % eingedampft. Die Konzentrate enthalten jedoch noch eine große Menge an thermoresistenten Keimen und Sporen, insbesondere aus der Maissilage, mit denen die Kühe gefüttert werden und die infolge nicht ausreichender Stallhygiene schließlich in der Rohmilch landen. Aus diesem Grunde ist es bislang erforderlich, die Konzentrate vor dem Versprühen einer Hocherhitzung zu unterwerfen, mit deren Hilfe die Keime und Sporen quantitativ zerstört werden und aus der ein keimfreies und hochqualitatives Produkt resultiert.

Allerdings wirkt sich die Hocherhitzung nicht nur auf die Keime und Sporen aus, es werden auch die wertvollen Molkenproteine ganz oder ganz überwiegend denaturiert und damit das Produkt in seiner Funktionalität und Ernährungsphysiologie nachteilig verändert. Molkenproteine gehören zu den Albuminen und Globulinen; dazu zählen insbesondere das alpha-Lactalbumin und das beta-Lactoglobulin, Serumalbumin, Proteosepepton und die Immunoglobuline. Molkenproteine stellen ernährungsphysiologisch betrachtet hochwertige Milchbestandteile dar und dienen beispielsweise in Eiweißpräparaten speziell zum Muskelaufbau. Während unbehandelte Magermilch als Maßzahl für den Gehalt an Molkenproteinen einen so genannten Molkenproteinindex (MPI, englisch WPNI) oberhalb von 6, speziell von 6,1 aufweist, nimmt dieser bei der üblichen Ultrahocherhitzung auf Werte unter 1 ab, was ausgesprochen unerwünscht ist.

Eine Alternative würde darin bestehen, die Temperaturbehandlung bei niedrigeren Temperaturen, etwa bei 70 °C anstelle von über 100 °C durchzuführen. In der Tat weisen die so erhaltenen Produkte einen MPI/WPNI oberhalb von 5 auf, allerdings ist die Keimbelastung so hoch, dass Produkte erhalten werden, die allenfalls eingeschränkt verkaufsfähig sind.

Die Aufgabe der vorliegenden Erfindung hat somit darin bestanden, Vollmilchpulver zur Verfügung zu stellen, die sowohl keimfrei bzw. keimarm sind, wie sie bisher nur nach den Hochtemperaturverfahren erhalten werden, als auch einen hohen MPI/WPNI von mindestens 2, speziell mindestens 4 und insbesondere 5,5 bis 6 zur Verfügung zu stellen, wie sie aus Niedrigtemperaturverfahren erhalten werden, obwohl diese beiden Parameter bislang stets einen entgegengesetzten Verlauf zeigen. Das Verfahren sollte zudem mit geringem technischem Aufwand durchführbar sein.

WO 01/47365 A1 beschreibt ein Verfahren zur Herstellung eines sterilen Milchpulvers mit geringer Milchproteinschädigung ohne absolute Zahlen für den MPI zu nennen. Voll- oder Magermilchkonzentrat wird einer UHT-Behandlung durch direkte Dampfinjektion oder direkte Dampf-Infusion unterzogen.

### Beschreibung der Erfindung

Gegenstand der Erfindung ist ein Verfahren zur Herstellung keimarmer Milchpulver mit einem Molkenproteinindex (MPI) von mindestens 2, umfassend die folgenden Schritte:
(a) Befreiung der Rohmilch in an sich bekannter Weise von Feststoffen,
(b) Entrahmung der so vorbehandelten Rohmilch aus Schritt (a) unter Erhalt einer Magermilchfraktion und einer Rahmfraktion;
(c) Unterwerfung der so erhaltenen Magermilch aus Schritt (b) einer Infusionserhitzung bei einer Temperatur von 120 bis 150 °C über einen Zeitraum von 0,1 bis 5 Sekunden, wobei die Magermilch und überhitzter Wasserdampf abwechselnd über konzentrische Ringdüsen in einen Reaktionsraum versprüht werden;
(d) Aufkonzentrieren der so behandelten Magermilch aus Schritt (c) auf eine Trockenmasse von 30 bis 50 Gew.-%;
(e) Unterwerfen des Rahms aus Schritt (b) einer Hochtemperaturerhitzung;
(f) Versetzen des Magermilchkonzentrats aus Schritt (d) mit dem temperaturbehandelten Rahm aus Schritt (e);
(g) Temperaturbehandlung der Mischung aus Schritt (f) über einen Zeitraum von mindestens 15 Sekunden bei mindestens 72 °C, und
(h) Verarbeitung des temperaturbehandelten Produktes aus Schritt (g) zu einem trockenen Pulver.

Überraschenderweise wurde gefunden, dass die Abtrennung der Keime aus der Milch durch Infusionserhitzung bei Temperaturen im Bereich von etwa 135 °C quantitativ erfolgen kann, ohne dass dabei eine Denaturierung der Molkenproteine stattfindet; eine Ultrahocherhitzung ist daher nicht mehr erforderlich.

Um das Milchkonzentrat auf eine Temperatur zu bringen, bei der es versprüht werden kann, reichen Temperaturen im Bereich von 70 °C aus, bei denen ebenfalls noch keine Molkenproteine denaturieren. Das Verfahren ist technisch einfach durchzuführen und liefert das gewünschte keimarme Produkt mit hohem MPI/WPNI. In der folgenden Tabelle A sind die typischen Spezifikationserfordernisse für ein keimarmes Milchpulver sowie die mit dem erfindungsgemäßen Verfahren erzielten Ergebnisse zusammengefasst:

**Tabelle A**

| Spezifikation keimarmes Pulver | | | |
|---|---|---|---|
| **Keimart** | **Methode** | **Anforderung** | **Erfindung** |
| Mesophile Sporen | 10 min 80°C / 30°C | max. 500/g | 2000/g |
| Thermophile Sporen | a) 10 min 80°C / 55°C | max. 500/g | 3000/g |
| | b) 30 min 100°C / 55°C | | |
| Bacillus Cereus | 10 min 80°C / 30°C selektiver Nährboden | < 10/g | < 100/g |
| Thermophile Keime | 55°C | max. 500/g | 4000/g |

**Tabelle A**

| Spezifikation keimarmes Pulver (Fortsetzung) | | | |
|---|---|---|---|
| **Keimart** | **Methode** | **Anforderung** | **Erfindung** |
| Sulfitreduzierende Sporen | 10 min 80°C / 37°C (MPN Selektivbouillon) | max. 10/g | < 10/g |
| Clostridium perfringens | 10 min / 80°C | max.10/g bis neg/g | < 10/g |
| Salmonella | LFGB § 64 modf. | neg in 750 - 1500g | neg in 750 - 1500g |
| Enterobacter sakazakii | Selektivnährboden | neg in 375 - 750g | neg in 375g |

### Pasteurisierung

Die primäre Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

Die Abtrennung von festen Nicht-Milch-Bestandteilen sowie die Entrahmung des Fettanteils von etwa 4 Gew.-% erfolgt üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/ molkereitechnik/milchmolke.html). Entsprechende Bauteile sind beispielsweise auch in der DE 10036085 C1 (West-falia) beschrieben und dem Fachmann bestens bekannt, so dass es zur Durchführung dieser Verfahrensschritte keiner Erläuterungen bedarf, da sie den allgemeinen Fachwissen zuzurechnen sind.

### Infusionserhitzung

Bei der Infusionserhitzung wird das zu behandelnde Produkt und überhitzter Wasserdampf abwechselnd über konzentrische Ringdüsen in einen Reaktionsraum versprüht. Der Sinn dieser Maßnahme besteht im Wesentlichen darin, eine hohe Durchmischung der Tröpfchen zu erreichen und damit einen optimalen Wärmeübergang sicherzustellen und durch den sich von außen nach innen einstellenden Dampfdruckgradienten zu verhindern, dass Produkt sich an der heißen Wandung abscheidet und zersetzt. Die Infusionserhitzung benötigt üblicherweise 0,1 bis 5 Sekunden Verweilzeit, wobei die Temperaturen bei etwa 120 bis etwa 150 °C und vorzugsweise bei etwa 135 °C liegen können. Die Produktphase sammelt sich am Boden des Reaktors und kann von dort abgezogen und weiterverarbeitet werden. Die Technologie als solches und die zugehörigen Bauteile sind in den internationalen Patentanmeldungen WO 2010 086082 A1 und WO 2011 101077 A1 (GEA) ausführlich beschrieben. In diesem Umfang wird auf deren Lehre in der vorliegenden Anmeldung Bezug genommen.

### Temperaturbehandlung und Trocknung

Die durch Infusionserhitzung behandelte Milch wird im Anschluss aufkonzentriert, beispielsweise durch Eindampfer oder mit Hilfe konventioneller Membranverfahren (z.B. Umkehrosmose) oder Kombinationen beider Verfahren.

Der erhitzten Milch wird der zuvor in Stufe (b) abgetrennte Rahm wieder zugesetzt. Entscheidend ist, dass die Mager- und nicht die Vollmilch der Infusionserhitzung unterworfen wird. Würde man auf die Abtrennung des Rahms verzichten, würde die hohe Fettbelastung unter Umständen dazu führen, dass die Abtötung der Keime wegen der großen Wärmelast nicht vollständig ist. Da auch im Rahm noch Keime enthalten sein können, wird dieser vor dem Zusammenführen mit der Magermilch einer Temperaturbehandlung über einen Zeitraum von 1 bis 10, vorzugsweise 3 bis 5 Sekunden bei 85 bis 138 °C unterworfen. Die hohen Temperaturen sind hier nicht von Bedeutung, da der Rahm ganz überwiegend Lipide und keine hitzeempfindlichen Proteine enthält.

Nach der Temperaturbehandlung wird das erwärmte Konzentrat in ein trockenes Pulver überführt. Hierfür kommen Bandtrocknung, Gefriertrocknung und insbesondere Sprühtrocknung in Frage.

Die Pulver enthalten in der Regel eine Restfeuchte von 1 bis 5, vorzugsweise 2 bis 3 Gew.-%, in welchem das Fett in Form von Einschlüssen mehr oder weniger gleichmäßig in den fettfreien Trockensubstanzen, d.h. Proteinen, Zuckern und Salzen verteilt ist. Den homogenisierten Konzentraten können vor dem Versprühen auch weitere Zusatzstoffe zugesetzt werden, wie beispielsweise Lecithine oder Lebensmittelemulgatoren [EP 1314357 A1 Nestle]

### Gewerbliche Anwendbarkeit

Keimarme Niedrigtemperatur Vollmilchpulver, die jeweils einen Molkenproteinindex oberhalb von 2, vorzugsweise im Bereich 3 bis 7,5 und insbesondere im Bereich von 5 bis 7 aufweisen, werden offenbart:
Die Vollmilchpulver mit einem MPI von mindestens 2 werden mit folgendem Verfahren erhalten:
   (a) Befreiung der Rohmilch in an sich bekannter Weise von Feststoffen,
   (b) Entrahmung der so vorbehandelten Rohmilch aus Schritt (a) unter Erhalt einer Magermilchfraktion und einer Rahmfraktion;
   (c) Unterwerfung der so erhaltenen Magermilch aus Schritt (b) einer Infusionserhitzung bei einer Temperatur von 120 bis 150 °C über einen Zeitraum von 0,1 bis 5 Sekunden, wobei die Magermilch und überhitzter Wasserdampf abwechselnd über konzentrische Ringdüsen in einen Reaktionsraum versprüht werden;
   (d) Aufkonzentrieren der so behandelten Magermilch aus Schritt (c) auf eine Trockenmasse von 30 bis 50 Gew.-%;
   (e) Unterwerfen des Rahms aus Schritt (b) einer Hochtemperaturerhitzung;
   (f) Versetzen des Magermilchkonzentrats aus Schritt (d) mit dem temperaturbehandelten Rahm aus Schritt (e);
   (g) Temperaturbehandlung der Mischung aus Schritt (f) über einen Zeitraum von mindestens 15 Sekunden bei mindestens 72 °C, und
   (h) Verarbeitung des temperaturbehandelten Produktes aus Schritt (g) zu einem trockenen Pulver.

Der bevorzugte MPI/WPNI liegt bei 5 bis 6.5.

### Beispiele

### Vergleichsbeispiel V1

Rohmilch wurde in an sich bekannter Weise von festen Bestandteilen befreit, pasteurisiert und entrahmt, so dass eine Magermilch mit einer Trockenmasse von ca. 9 Gew.-% resultierte. Diese wurde schonend auf eine Trockenmasse von ca. 40 Gew.-% eingedampft. Das so erhaltene Konzentrat wies einen MPI von 6,1 auf wurde über einen Zeitraum von etwa 5 Sekunden einer Hocherhitzung bei 120 °C unterworfen und dabei Sporen und andere Keime quantitativ zerstört. Es wurde ein keimfreies Konzentrat erhalten, das anschließend über einen Turm versprüht wurde. Es wurde ein praktisch keimfreies Hochtemperatur Magermilchpulver mit einem MPI/WPNI von nur 1,3 erhalten.

### Vergleichsbeispiel V2

Beispiel V1 wurde wiederholt, statt der Hocherhitzung bei 105 °C jedoch eine Temperaturbehandlung über ebenfalls 5 Sekunden bei 70 °C durchgeführt. Nach dem Versprühen wurde ein Niedrigtemperatur Magermilchpulver mit einem MPI/WPNI von 5,9 erhalten, das jedoch keimbelastet und daher für den Verzehr nur eingeschränkt geeignet war.

### Vergleichsbeispiel 3: Herstellung eines keimarmen Magermilchpulvers

Beispiel V2 wurde wiederholt, die Magermilch jedoch vor der Eindampfungsstufe über 3 Sekunden einer Infusionserhitzung bei 135 °C unterworfen, das so behandelte Produkt eingedampft und dann wie oben beschrieben versprüht. Es wurde ein Low Temperature Magermilchpulver mit einem MPI/WPNI von 6,8 erhalten, das praktisch keimfrei war.

Beispiel 1: **Herstellung eines keimarmen Vollmilchpulvers** Rohmilch wurde in an sich bekannter Weise von festen Bestandteilen befreit, pasteurisiert und entrahmt, so dass eine Magermilch mit einer Trockenmasse von ca. 9 Gew.-% resultierte. Diese wurde wie in Beispiel 1 beschrieben einer Infusionserhitzung unterworfen. Der bei der Herstellung der Magermilch angefallene Rahm wurde einer Hocherhitzung bei 125 °C unterworfen und der Magermilch wieder zugesetzt, so dass eine Vollmilch resultierte. Es wurde ein Niedrigtemperatur Vollmilchpulver mit einem MPI/WPNI von 6,3 erhalten, das praktisch keimfrei war.

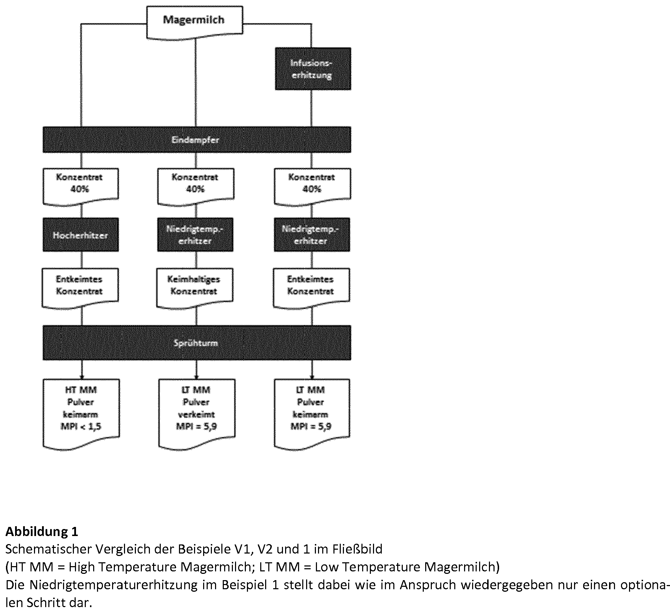

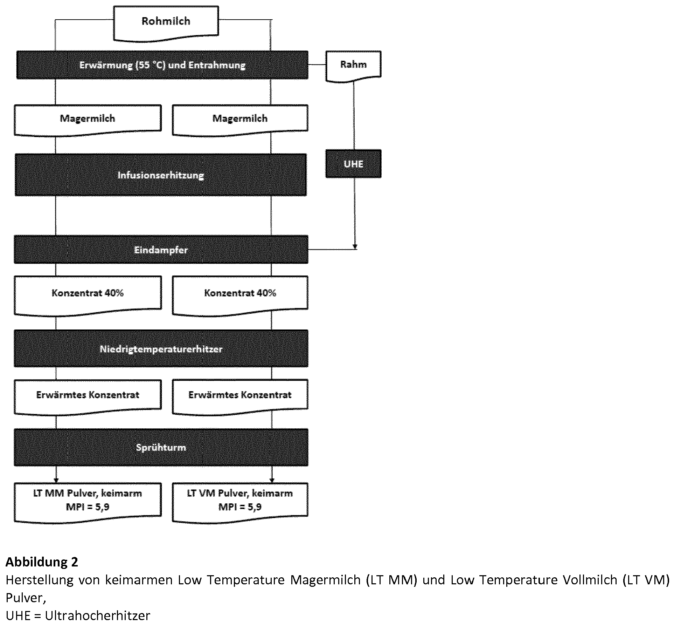

Die Beispiele V1, V2 und V3 werden in der Abbildung 1 noch einmal mit einem Flussdiagramm gegenübergestellt. Abbildung 2 zeigt die Unterschiede bei der Herstellung von Magermilch- und Vollmilchpulvern.

## Patentansprüche

1. Verfahren zur Herstellung keimarmer Milchpulver mit einem Molkenproteinindex (MPI) von mindestens 2, umfassend die folgenden Schritte:
(a) Befreiung der Rohmilch in an sich bekannter Weise von Feststoffen,
(b) Entrahmung der so vorbehandelten Rohmilch aus Schritt (a) unter Erhalt einer Magermilchfraktion und einer Rahmfraktion;
(c) Unterwerfung der so erhaltenen Magermilch aus Schritt (b) einer Infusionserhitzung bei einer Temperatur von 120 bis 150 °C über einen Zeitraum von 0,1 bis 5 Sekunden, wobei die Magermilch und überhitzter Wasserdampf abwechselnd über konzentrische Ringdüsen in einen Reaktionsraum versprüht werden;
(d) Aufkonzentrieren der so behandelten Magermilch aus Schritt (c) auf eine Trockenmasse von 30 bis 50 Gew.-%;
(e) Unterwerfen des Rahms aus Schritt (b) einer Hochtemperaturerhitzung;
(f) Versetzen des Magermilchkonzentrats aus Schritt (d) mit dem temperaturbehandelten Rahm aus Schritt (e);
(g) Temperaturbehandlung der Mischung aus Schritt (f) über einen Zeitraum von mindestens 15 Sekunden bei mindestens 72 °C, und
(h) Verarbeitung des temperaturbehandelten Produktes aus Schritt (g) zu einem trockenen Pulver.

2. Verfahren nach Anspruch 1, **dadurch gekennzeichnet, dass** man den Rahm einer Temperaturbehandlung über einen Zeitraum von 1 bis 10 Sekunden bei 85 bis 145 °C unterwirft.

3. Verfahren nach den Ansprüchen 1 und/oder 2, **dadurch gekennzeichnet, dass** man das Konzentrat durch Versprühen zu einem trockenen Pulver verarbeitet.

4. Verfahren nach mindestens einem der Ansprüche 1 bis 3, **dadurch gekennzeichnet, dass** die Milchpulver einen MPI von mindestens 4 aufweisen.

5. Verfahren nach mindestens einem der Ansprüche 1 bis 3, **dadurch gekennzeichnet, dass** die Milchpulver einen MPI von 5,5 bis 6 aufweisen.

## Claims

1. A process for the production of low-bacteria milk powders having a whey protein nitrogen index (WPNI) of at least 2, comprising the following steps:
(a) removal of solids from raw milk in a method known in itself;
(b) skimming of the said raw milk obtained from step (a) to obtain a skim milk fraction and a cream fraction;
(c) subjecting said skim milk obtained from step (b) to heat infusion at a temperature of from 120 to 150 °C for a period of from 0.1 to 5 seconds, whereby skim milk and superheated steam are alternately sprayed via concentric ring nozzles into a reaction space;
(d) concentration of said treated skim milk obtained from step (c) to a dry matter of 30 to 50 % by weight;
(e) subjecting said cream obtained from step (b) to ultra-high heat treatment;
(f) blending said skim milk concentrate obtained from step (d) with the temperature treated cream obtained from step (e),
(g) subjecting the mixture obtained from step (f) to thermal treatment for a period of at least 15 seconds at a temperature of at least 72 °C; and
(h) processing the thermally treated product obtained from step (g) to obtain a dry powder.

2. The process according to claim 1, **characterized in that** the cream is subjected to a thermal treatment for a period of from 1 to 10 seconds at a temperature of from 85 to 145 °C.

3. The process according to claim 1 or 2, **characterized in that** the concentrate is processed to a dry powder by spraying.

4. The process of at least one of claims 1 to 3, **characterized in that** said milk powders show an MPI of at least 4.

5. The process of at least one of claims 1 to 3, **characterized in that** said milk powders show an MPI of from 5.5 to 6.

## Revendications

1. Procédé pour la production de lait en poudre pauvres en germes ayant un index de lactosérum d'au moins 2, comprenant les étapes suivants :
(a) Libération du lait cru des matières solides de manière connu,
(b) Ecrémé du lait cru ainsi prétraité en étape (a) pour obtenir une fraction de lait écrémé et une fraction de crème ;
(c) Soumission du lait écrémé ainsi obtenu en étape (b) par un échauffement d'infusion à une température de 120 à 150 degrés pendant une période de 0,1 à 5 secondes, dans lequel le lait écrémé et la vapeur d'eau surchauffée sont atomisés sur des buses annulaires en alternance dans un espace de réaction ;
(d) Concentration du lait écrémé ainsi traité en étape (c) à une matière sèche de 30 à 50 % en poids;
(e) Chauffage à haute température de la crème obtenu en étape (b) ;
(f) Mélange du concentrât du lait cru de l'étape (d) avec la crème traité thermiquement de l'étape (e) ;
(g) Traitement thermique du mélange obtenu en étape (f) pendant une période d'au moins 15 secondes à une température d'au moins 72 degrés et
(h) Transformation des produits traités thermiquement de l'étape (g) en une poudre sèche.

2. Procédé selon la revendication 1, **caractérisé en ce que** la crème est chauffée pendant une période de 1 à 10 secondes à une température de 85 à 145 degrés.

3. Procédé selon les revendications 1 et/ou 2, **caractérisé en ce que** le concentrât est transformé en une poudre sèche par pulvérisation.

4. Procédé selon au moins une des revendications 1 à 3, **caractérisé en ce que** le lait en poudre a un index de lactosérum d'au moins 4.

5. Procédé selon au moins une des revendications 1 à 3, **caractérisé en ce que** le lait en poudre a un index de lactosérum d'au moins 5,5 à 6.
